# EUROPEAN PATENT SPECIFICATION

(11) **EP 2 565 111 B1**
(45) Date of publication and mention of the grant of the patent: **18.03.2015**
(21) Application number: 12179559.5
(22) Date of filing: 07.08.2012
(51) Int. Cl.: B62K 25/28

(54) **Swing arm for vehicle**
Fahrzeugschwinge
Bras oscillant pour véhicule

(30) Priority: 31.08.2011 JP 2011188392
(43) Date of publication of application: 06.03.2013
(73) Proprietor: Honda Motor Co., Ltd., Tokyo 107-8556 (JP)
(72) Inventor: Uchiyama, Mikio, Wako-shi, Saitama 351-0193 (JP); Kuboyama, Hirotsugu, Wako-shi, Saitama 351-0193 (JP); Ozeki, Shinichi, Wako-shi, Saitama 351-0193 (JP)
(74) Representative: Stevens, Jason Paul

(56) References cited:
- EP-A2- 0 295 799
- JP-A- H03 164 389
- JP-A- H05 105 171
- JP-A- 2011 093 410
- JP-U- H0 620 182
- JP-U- S60 175 790
- US-A1- 2005 206 122
- US-A1- 2008 073 140
- US-A1- 2008 156 571

## Description

The present invention relates to a swing arm for a vehicle, and in particular to the type of swing arm formed from a pair of left and right arm portions which extend in the longitudinal direction, a pivot portion which is formed on the front ends of the arm portions, an axle support portion which is formed on the rear ends of the arm portions so as to pivotally support an axle of a rear wheel, and a cross portion which is arranged between the arm portions and connects the arm portions behind the pivot portion, which are integrally formed with each other by moulding. At least the cross portion is formed into a hollow shape, and a pair of left and right support bosses for supporting a shock absorber are integrally formed on a lower wall or an upper wall of the cross portion in an outwardly projecting manner.

With respect to a vehicle such as a motorcycle, it is known to form a swing arm using a light alloy such as an aluminium alloy or a magnesium alloy, for enhancing the reduction of weight and the attraction of a product. In the vehicle of JP-A-2008-81107, a swing arm is integrally formed by die-casting using an aluminium alloy.

When a swing arm is formed by casting, if a wall thickness of the swing arm is increased in order to increase the rigidity of the swing arm, a cooling rate of a thick wall portion becomes slow. This can result in a drawback in that cavities occur in the portion, and hence, a simple increase of the wall thickness cannot be adopted. In particular, with respect to a swing arm on which a shock absorber is supported, it is desirable to reduce the chance of the occurrence of cavities while increasing the rigidity of a support boss which is formed on a cross portion for supporting the shock absorber.

The present invention has been made in view of the above-mentioned circumstances, and it is an object of at least the preferred embodiments of the present invention to provide a swing arm for a vehicle where the rigidity of a support boss formed on a cross portion for supporting a shock absorber can be increased while suppressing the occurrence of cavities.

A swing arm accoridng to the preamble of claim 1 is disclosed in JP 2011-093410. A similar swing arm is disclosed in EP 0295799.

According to a first aspect of the invention, there is provided a swing arm for a vehicle where a pair of left and right arm portions which extend in the longitudinal direction, a pivot portion which is formed on front ends of the arm portions, an axle support portion which is formed on rear ends of the arm portions so as to pivotally support an axle of a rear wheel, and a cross portion which is arranged between the arm portions and connects the arm portions behind the pivot portion are integrally formed with each other by moulding, at least the cross portion is formed into a hollow shape, and a pair of left and right support bosses for supporting a shock absorber is integrally formed on a lower wall or an upper wall of the cross portion in an outwardly projecting manner, wherein the pivot portion is contiguously formed with the arm portions in the lateral direction of the vehicle so as to connect front ends of the arm portions to each other; and an opening portion whose peripheral portion is endlessly contiguously formed and whose upper and lower ends are open is formed by the cross portion, the pivot portion and the pair of left and right arm portions; characterized in that a pair of left and right recessed portions, each of which is indented toward a support boss side, are formed on an inner surface of a wall on which the support bosses are formed in a projecting manner, said wall being a lower wall or an upper wall of the cross portion; and a pair of left and right reinforcing ribs, each of which is positioned laterally outside the recessed portions, is integrally formed on the inner surface of the wall on which the support bosses are formed so as to project toward the inside of the cross portion.

With this arrangement, the opening portion is formed by the pivot portion which is contiguously formed to connect both arm portions, the cross portion and the pair of left and right arm portions, such that the opening portion has its upper and lower ends open. Accordingly, the rigidity of the front portion of the swing arm can be increased. Further, out of the lower wall and the upper wall of the cross portion, on the inner surface of the wall on which the support bosses are formed, , the pair of left and right recessed portions are formed and also the pair of left and right reinforcing ribs are integrally formed. Accordingly, it is possible to efficiently increase the rigidity of the cross portion while avoiding an increase of wall thickness of the cross portion at the portions on which the support bosses are formed, and thereby the occurrence of cavity can be suppressed.

Preferably, a support hole is formed in the support boss behind a centre portion of the support boss in the longitudinal direction of the support boss, and the reinforcing ribs are formed so as to project forwardly from a rear wall of the cross portion, and front ends of the reinforcing ribs are positioned in front of rear ends of the recessed portions.

With this arrangement, the rigidity of the rear wall can be efficiently increased by the reinforcing ribs corresponding to the increase of a stress applied to the rear wall of the cross portion.

Preferably, the arm portions are formed into an angular cylindrical shape having a rectangular transverse cross section.

Hence, the rigidity of the arm portion can be increased while reducing the number of parts.

In a further preferred form, the shock absorber can be arranged to extend vertically and pass through the opening portion in a state where the shock absorber is supported by the support bosses which project toward the outside from the lower wall of the cross portion, and core removal holes through which a casting core can be removed are formed on inner walls of the both arm portions, at portions where the core removal holes face the opening portion.

With this arrangement, the core removal holes are formed at portions of the swing arm where the rigidity is increased due to the endless contiguous wall and hence, it is possible to avoid a large reduction in the rigidity of the swing arm due to the formation of the core removal holes.

Preferably, communication holes which allow the inside of the arm portions to communicate with the inside of the pivot portion are formed in connecting portions between the arm portions and the pivot portion respectively.

With this arrangement, a wall thickness of the swing arm which is formed by integral moulding can be made uniform, the occurrence of cavities can be also suppressed, and cores for forming the arm portions and a core for forming the pivot portion can be formed as an integral part.

Preferably, a pair of left and right bearings is interposed between the pivot portion and a support shaft (which is made to pass through the pivot portion in a state where the left and right bearings are arranged outside the pair of communication holes, and a pair of left and right first seal members which is arranged between the bearings and the communication holes and a pair of left and right second seal members which is arranged between the bearings and the outside are interposed between the pivot portion and the support shaft.

With this arrangement, intrusion of water into the bearings from the communication holes side, and intrusion of water into the bearings from the outside, can be prevented by the first sealing members and the second sealing members.

A preferred aspect of the invention will now be described by way of example only and with reference to the accompanying drawings, in which:
Fig. 1 is a left side view of a motorcycle;
Fig. 2 is an enlarged view of a portion indicated by an arrow 2 in Fig. 1.
Fig. 3 is an enlarged cross-sectional view of a swing arm taken along a line 3-3 in Fig. 2; and
Fig. 4 is a cross-sectional view taken along a line 4-4 in Fig. 3.

An embodiment of the present invention will now be explained in conjunction with Figs, 1 to 4. In the following description, the directions forward, rearward, upward, downward, leftward and rightward are as viewed from a rider who rides on a motorcycle.

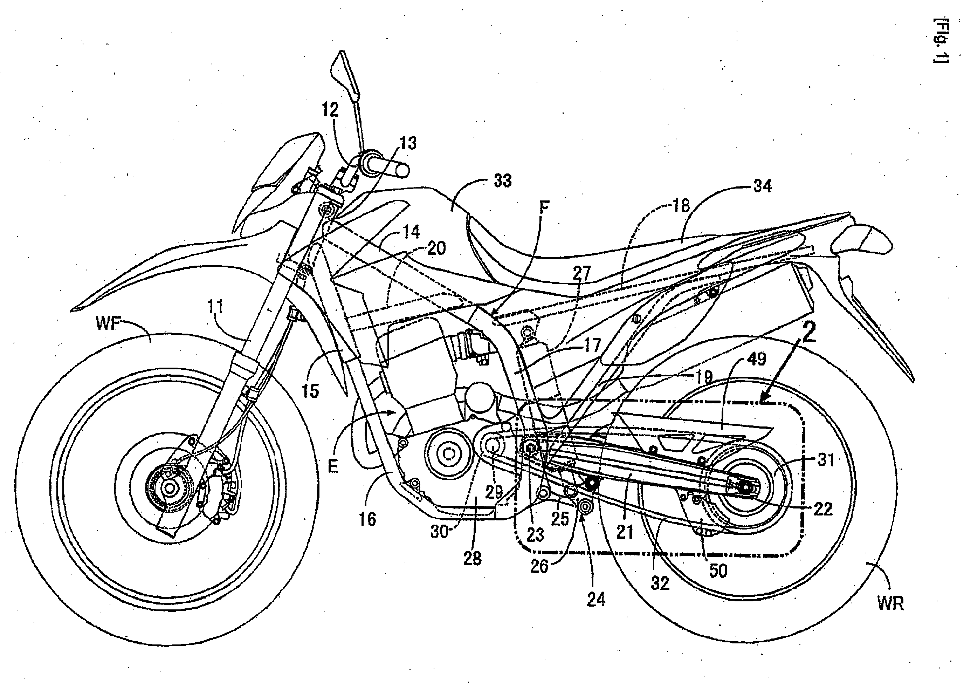

Firstly, as shown in Fig. 1, a vehicle body frame F of a motorcycle includes: a head pipe 13 which supports a front fork 11 which pivotally supports a front wheel WF and a handlebar 12 in a steerable manner; a pair of left and right main frames 14 which extend in the rearward and downward direction from the head pipe 13; a down frame 15 which extends in the rearward and downward direction from the head pipe at a steeper angle than the main frames 14; a pair of left and right lower frames 16 which are connected to a lower end portion of the down frame 15 and extend in the rearward direction; a pair of left and right pivot frames 17 which have their upper end portions joined to rear end portions of the main frames 14, extend in the downward direction, and have their lower end portions connected to rear end portions of the lower frames 16; a pair of left and right seat rails 18 which have their front end portions connected to rear portions of the main frames 14 and extend in the rearward direction; a pair of left and right rear frames 19 which connect vertically intermediate portions of the pivot frames 17 with rear portions of the seat rails 18; and a reinforcing frame 20 which connects a lower portion of the down frame 15 and both main frames 14 to each other.

An engine E is mounted on the vehicle body frame F, and is arranged in a space surrounded by the main frames 14, the down frame 15, the lower frames 16, and the pivot frames. On lower portions of the pivot frames 17, a front end portion of a swing arm 21 is pivotally supported in a vertically swingable manner by way of a support shaft 23, and the swing arm 21 pivotally supports an axle 22 of a rear wheel WR on a rear end portion thereof. A link mechanism 24 is arranged between the lower portions of the pivot frames 17 and the swing arm 21. The link mechanism 24 includes: a link rod 25 which has one end portion connected to the lower portions of the pivot frames 17 in a rotatable manner; and a link member 26 which is rotatably supported on the swing arm 21 and to which the other end portion of the link rod 25 is rotatably connected. A shock absorber 27 which includes a spring and a damper is arranged between the link member 26 and upper portions of the pivot frames 17.

A transmission (not shown in the drawings) is housed inside a crankcase 28, which forms part of the engine. An output shaft 29 of the transmission projects from the crankcase 28. An endless chain 32 extends between and is wound around a drive sprocket 30 which is mounted on the output shaft 29 and a driven sprocket 31 which is mounted on the axle 22 of the rear wheel WR.

Further, a fuel tank 33 is mounted on the main frames 14 above the engine E, and a rider's seat 34 is arranged behind the fuel tank 33 and is supported on the seat rails 18.

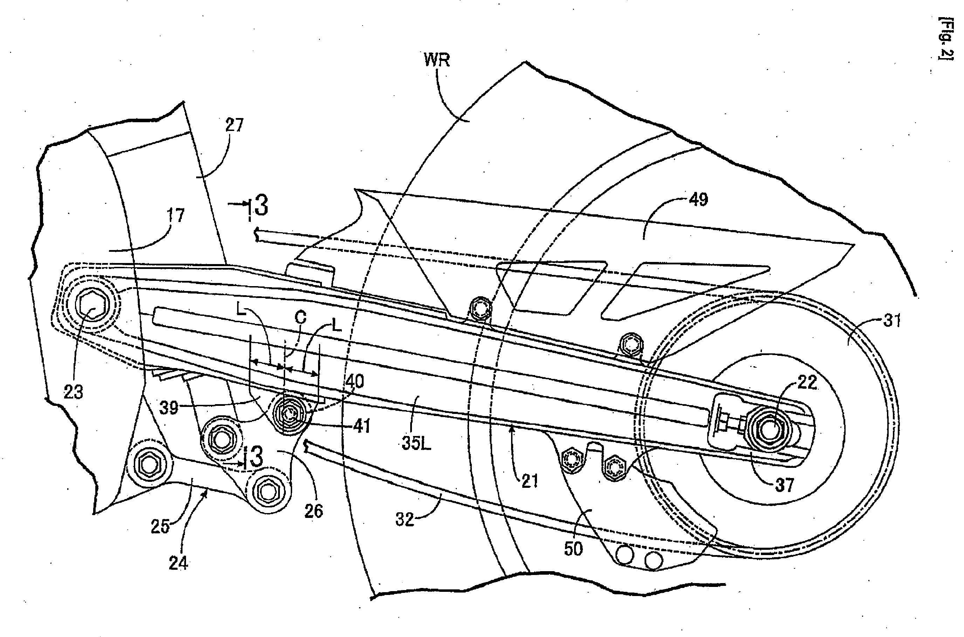

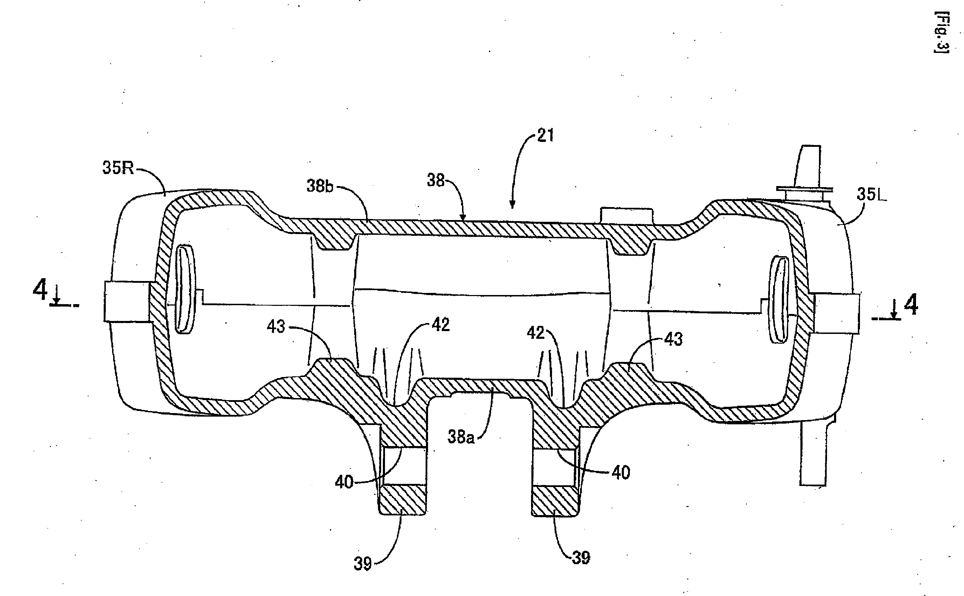

As shown in Figs. 2 to 4, the swing arm 21 is an integral body constituted of: a pair of left and right arm portions 35L, 35R which extend in the longitudinal direction; a pivot portion 36 formed at the front ends of the arm portions 35L, 35R; axle support portions 37 which are formed on the rear ends of the arm portions 35L, 35R so that the axle support portions 37 pivotally support the axle 22 of the rear wheel WR; and a cross portion 38 which connects the arm portions 35L, 35R to each other behind the pivot portion 36. The swing arm 21 is formed by integral moulding from a light alloy such as aluminium by gravity casting, for example.

At least the cross portion 38 of the swing arm 21 is formed into a hollow shape. In the preferred embodiment, not only the cross portion 38 but also both arm portions 35L, 35R are formed into an angular cylindrical shape having a rectangular transverse cross section. Further, the pivot portion 36 which connects the front ends of both arm portions 35L, 35R to each other and is contiguously formed with both arm portions 35L, 35R in the lateral direction of the vehicle is formed into a hollow circular cylindrical shape. Further, communication holes 51, 51 which allow the insides of the arm portions 35L, 35R to communicate with the inside of the pivot portion 36 are formed in connecting portions between both arm portions 35L, 35R and the pivot portion 36.

When installed on the motorcycle, the pivot portion 36 is pivotally supported on the lower portions of the pair of left and right pivot frames 17 by way of the support shaft 23 which passes through the pivot portion 36. The support shaft 23 is constituted of a circular cylindrical collar 52 which passes through the pivot portion 36 over the whole length of the pivot portion 36, and a bolt 53 which passes through the pair of left and right pivot frames 17 and the collar 52. An enlarged diameter head portion 53a of the bolt 53 is engaged with and brought into contact with an outer side surface of the pivot frame 17 on one side, and a nut 54 is threadedly engaged with a portion of the bolt 53 projecting from the pivot frame 17 on the other side.

Needle bearings 55, 55, which constitute a pair of left and right bearings, are interposed between the collar 52 of the support shaft 23 and the pivot portion 36, with the needle bearings 55, 55 being located laterally outside of the communication holes 51. Left and right first sealing members 56, 56 are interposed between the collar 52 of the support shaft 23 and the pivot portion 36, as well as between the needle bearings 55 and the communication holes 51.

Further, left and right second sealing members 57, 57, which are arranged between both needle bearings 55 and the outside, are interposed between the pivot portion 36 and the support shaft 23. That is, the pivot portion 36 includes, as integral parts thereof, small-diameter cylindrical portions 36a, 36a which have a narrowed outer diameter at both ends thereof, project outwardly, and are arranged coaxially with the pivot portion 36. The second sealing members 57, which are formed into a cap shape, are arranged in a sandwiched manner between the pivot frames 17 and end portions of the small-diameter cylindrical portions 36a, such that the second sealing members 57 close both end opening portions of the small-diameter cylindrical portions 36a and are resiliently brought into contact with outer peripheries of the small-diameter cylindrical portions 36a.

A pair of support bosses 39, 39, which project outwardly from a lower wall 38a or an upper wall 38b of the cross portion 38, is integrally formed on the cross portion 38. In this embodiment, left and right support bosses 39, 39 are integrally formed on the cross portion 38 and project downwardly from the lower wall 38a of the cross portion 38.

A lower end portion of the shock absorber 27 is supported on the support bosses 39 by way of the link member 26 which constitutes a portion of the link mechanism 24. Support holes 40 through which a connection shaft 41 (see Fig. 2) for rotatably connecting the link member 26 to the support bosses 39 can pass are coaxially formed in the support bosses 39.

Further, as shown in Fig. 2, the support holes 40 are arranged behind the centre portions of the support bosses 39 in the longitudinal direction. That is, the support holes 40 are formed in the support bosses 39 such that the centre axis of each support hole 40 is arranged behind a centre position C (at which a distance L from a front end of the support boss 39 to the centre portion C and a distance L from a rear end of the support boss 39 to the centre portion C are equal).

On an inner surface of the wall from which the support bosses 39 project (in this case, on an inner surface of the lower wall 39a), a pair of left and right recessed portions 42, 42 which are indented toward a support boss 39 side is formed. Further, a pair of left and right reinforcing ribs 43, 43, each of which is positioned laterally outside one of the recessed portions 42, is integrally formed to project toward the inside of the cross portion 38. Further, the reinforcing ribs 43 are formed so that they extend forward from a rear wall 38c of the cross portion 38. The reinforcing ribs 43 are formed in a projecting manner integrally contiguous with an inner surface of the rear wall 38c of the cross portion 38, an inner surface of the lower wall 38a, and an inner surface of a rear half portion of the upper wall 38b of the cross portion 38, in such a manner that the front ends of the reinforcing ribs 43 are positioned in front of the rear ends of the recessed portions 42.

Here, an opening portion 44 whose peripheral portion is endlessly contiguously formed and whose upper and lower ends are open is formed by the cross portion 38, the pivot portion 36 and the pair of left and right arm portions 35L, 35R, and the shock absorber 27 can pass through the opening portion 44. Further, core removing holes 45, 45, through which a sand core used in forming the swing arm 21 by moulding can be removed, are formed in inner walls of both arm portions 35L, 35R at portions so that the core removing holes 45, 45 face the opening portion 44. Caps 46, 46 are mounted on the respective core removing holes 45 after the formation of the swing arm 21 by moulding is completed.

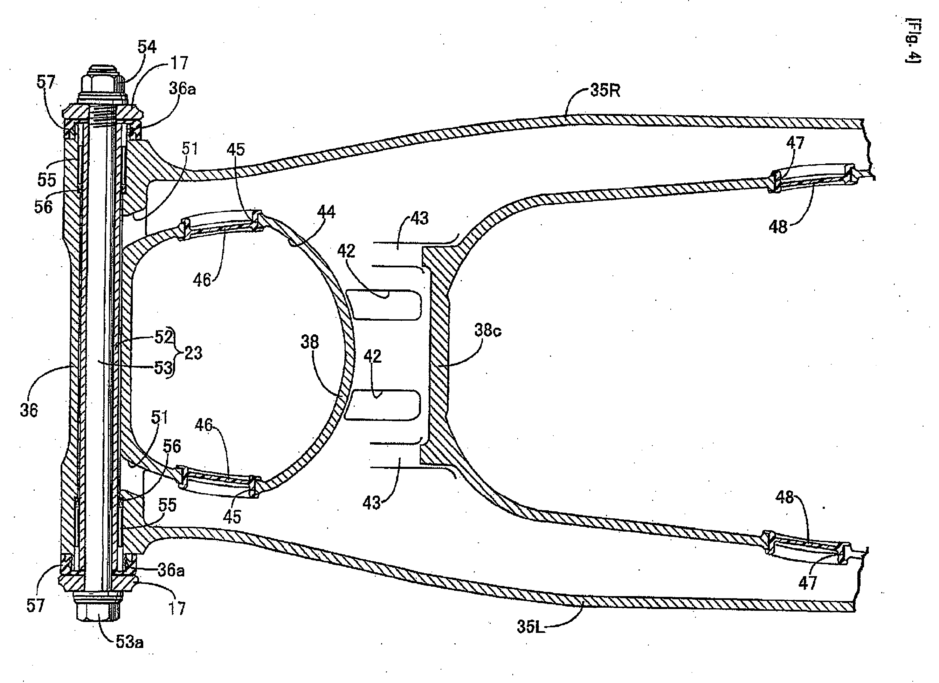

Further, as shown in Fig. 4, core removing holes 47, 47 through which a sand core can be removed are also formed in inner walls of rear portions of the pair of left and right arm portions 35L, 35R, and caps 48, 48 are mounted on the respective core removing holes 47.

As shown in Fig. 1 and Fig. 2, a chain case 49 is mounted on an upper wall of the rear portion of the left arm portion 35L of the swing arm 21, and a chain guide 50 is mounted on a lower wall of the rear portion of the arm portion 35L.

Next, to explain the manner of operation of this embodiment, the swing arm 21 is an integral body formed by moulding and is constituted of: the pair of left and right arm portions 35L, 35R which extends in the longitudinal direction; the pivot portion 36 which is formed between the front ends of the arm portions 35L, 35R; the axle support portions 37 which are mounted on the rear ends of the arm portions 35L, 35R such that the axle support portions 37 can pivotally support the axle 22 of the rear wheel WR; and the cross portion 38 which connects the arm portions 35L, 35R to each other behind the pivot portion 36; wherein at least the cross portion 38 is formed into a hollow shape, and the pair of left and right support bosses 39, 39 for supporting the shock absorber 27 is integrally formed with the cross portion 38 so as to project downwardly from the lower wall 38a of the cross portion 38. In such a constitution, the pivot portion 36 is contiguously formed with both arm portions 35L, 35R in the lateral direction in a state where the pivot portion 36 connects the front ends of both arm portions 35L, 35R to each other, and the opening portion 44 whose peripheral portion is endlessly contiguously formed and whose upper and lower ends are open is formed by the cross portion 38, the pivot portion 36 and the pair of left and right arm portions 35L, 35R and hence, the rigidity of the front portion of the swing arm 21 can be increased.

The left and right recessed portions 42, 42 which are indented toward the support bosses 39 side is formed on the inner surface of the lower wall 38a of the cross portion 38, and the left and right reinforcing ribs 43, 43 which are positioned laterally outside the respective recessed portions 42 are integrally formed on the inner surface of the lower wall 38a so as to project toward the inside of the cross portion 38. Accordingly, the rigidity of the cross portion 38 can be efficiently increased while avoiding an increase in wall thickness of the cross portion 38 at portions where the support bosses 39 are formed and thereby the occurrence of cavities can be suppressed.

Further, the support holes 40 are formed in the support bosses and are arranged behind the centre portion of the support bosses 39 in the longitudinal direction, the reinforcing ribs 43 are formed so as to extend forwardly from the rear wall 38c of the cross portion 38, and the front ends of the reinforcing ribs 43 are arranged in front of the rear ends of the recessed portions 42. Accordingly, the rigidity of the rear wall 38c can be efficiently increased by the reinforcing ribs 43 corresponding to the increase of a stress applied to the rear wall 38c of the cross portion 38.

Further, the arm portions 35L, 35R are formed into an angular cylindrical shape having a rectangular transverse cross section and hence, the rigidity of the arm portions 35L, 35R can be increased while reducing the number of parts.

Further, the shock absorber 27 which extends in the vertical direction is made to pass through the opening portion 44 in a state where the shock absorber 27 is supported on the support bosses 39 which project outwardly from the lower wall 38a of the cross portion 38, and the core removing holes 45 through which a core is removed are formed in the inner walls of both arm portions 35L, 35R at portions where the core removing holes 45 face the opening portion 44. Accordingly, the core removing holes 45 are formed in portions of the swing arm 21 which are endlessly contiguously formed, and thus in portions where the rigidity is increased, and hence, it is possible to avoid a large reduction in the rigidity of the swing arm 21 due to the formation of the core removing holes 45.

Further, the communication holes 51 which allow the insides of the arm portions 35L, 35R to communicate with the inside of the pivot portion 36 are formed in the connecting portions between both arm portions 35L, 35R and the pivot portion 36. Accordingly, a wall thickness of the swing arm 21 which is formed by integral moulding can be made uniform, the occurrence of cavities can be suppressed, and cores for forming the arm portions 35L, 35R and a core for forming the pivot portion 36 can be formed integrally.

The left and right needle bearings 55 are interposed between the pivot potion 36 and the support shaft 23 which passes through the pivot portion 36 in a state where the needle bearings 55 are arranged outside the pair of communication holes 51, and the left and right first sealing members 56 which are arranged between the respective needle bearings 55 and the communication holes 51 and the left and right second sealing members 57 which are arranged between both needle bearings 55 and the outside are interposed between the pivot portion 36 and the support shaft 23. Accordingly, intrusion of water into the needle bearings 55 from the communication holes 51 side, and intrusion of water into the needle bearings 55 from the outside, can be prevented by the first and second sealing members 56, 57.

Although one embodiment of the present invention has been explained heretofore, the present invention is not limited to the above-mentioned embodiment, and various modifications in design are conceivable without departing from the present invention as defined in the claims.

For example, in the above-mentioned embodiment, although the explanation has been made with respect to a swing arm for a motorcycle, the present invention is widely applicable to a swing arm of a miniaturized vehicle including the motorcycle and a motor tricycle.

## Claims

1. A swing arm for a vehicle where a pair of left and right arm portions (35L, 35R) which extend in the longitudinal direction, a pivot portion (36) which is formed on front ends of the arm portions (35L, 35R), an axle support portion (37) which is formed on rear ends of the arm portions (35L, 35R) so as to pivotally support an axle (22) of a rear wheel (WR), and a cross portion (38) which is arranged between the arm portions (35L, 35R) and connects the arm portions (35L, 35R) behind the pivot portion (36) are integrally formed with each other by moulding, at least the cross portion (38) is formed into a hollow shape, and a pair of left and right support bosses (39) for supporting a shock absorber (27) is integrally formed on a lower wall (38a) or an upper wall (38b) of the cross portion (38) in an outwardly projecting manner,
wherein the pivot portion (36) is contiguously formed with the arm portions (35L, 35R) in the lateral direction of the vehicle so as to connect front ends of the arm portions (35L, 35R) to each other; and
an opening portion (44) whose peripheral portion is endlessly contiguously formed and whose upper and lower ends are open is formed by the cross portion (38), the pivot portion (36) and the pair of left and right arm portions (35L, 35R);
**characterized in that**
a pair of left and right recessed portions (42), each of which is indented toward a support boss (39) side, are formed on an inner surface of a wall on which the support bosses (39) are formed in a projecting manner, said wall being a lower wall (38a) or an upper wall (38b) of the cross portion (38);
and a pair of left and right reinforcing ribs (43), each of which is positioned laterally outside the recessed portions (42), is integrally formed on the inner surface of the wall on which the support bosses (39) are formed so as to project toward the inside of the cross portion (38).

2. The swing arm for a vehicle according to claim 1, wherein a support hole (40) is formed in the support boss (39) behind a centre portion of the support boss (39) in the longitudinal direction of the support boss (39), and the reinforcing ribs (43) are formed so as to project forwardly from a rear wall (38c) of the cross portion (38), and front ends of the reinforcing ribs (43) are positioned in front of rear ends of the recessed portions (42).

3. The swing arm for a vehicle according to claim 1 or 2, wherein the arm portions (35L, 35R) are formed into an angular cylindrical shape having a rectangular transverse cross section.

4. The swing arm for a vehicle according to claim 3, wherein said shock absorber (27) can be arranged to extend vertically and pass through the opening portion (44) in a state where the shock absorber (27) is supported by the support bosses (39) which project toward the outside from the lower wall, (38a) of the cross portion (38), and core removal holes (45) through which a casting core can be removed are formed on inner walls of the both arm portions (35L, 35R), at portions where the core removal holes (45) face the opening portion (44).

5. The swing arm for a vehicle according to claim 3 or 4, wherein communication holes (51) which allow the inside of the arm portions (35L, 35R) to communicate with the inside of the pivot portion (36) are formed in connecting portions between the arm portions (35L, 35R) and the pivot portion (36) respectively.

6. The swing arm for a vehicle according to claim 5, wherein a pair of left and right bearings (55) is interposed between the pivot portion (36) and a support shaft (23) which is made to pass through the pivot portion (36) in a state where the left and right bearings (55) are arranged outside the pair of communication holes (51), and a pair of left and right first seal members (56) which is arranged between the bearings (55) and the communication holes (51) and a pair of left and right second seal members (57) which is arranged between the bearings (55) and the outside are interposed between the pivot portion (36) and the support shaft (23).

## Patentansprüche

1. Eine Fahrzeugschwinge, wobei ein Paar aus einem linken und einem rechten Armabschnitt (35L, 35R), welche sich in die Längsrichtung ausdehnen, ein Schwenkabschnitt (36), welcher an den vorderen Enden der Armabschnitte (35L, 35R) geformt ist, ein Achsenstützabschnitt (37), welcher an den hinteren Enden der Armabschnitte (35L, 35R) geformt ist, um eine Achse (22) eines Hinterrads (WR) schwenkend zu unterstützen, und ein Querabschnitt (38), welcher zwischen den Armabschnitten (35L, 35R) angeordnet ist und die Armabschnitte (35L, 35R) hinter dem Schwenkabschnitt (36) verbindet, integral miteinander durch Formen geformt werden, wobei zumindest der Querabschnitt (38) in eine hohle Form geformt wird, und ein Paar aus einer linken und einer rechten Nabenabstützung (39) zur Unterstützung eines Stoßdämpfers (27) integral auf eine nach außen überragende Art an einer unteren Wand (38a) oder einen oberen Wand (38b) des Querabschnitts (38) geformt wird,
wobei der Schwenkabschnitt (36) zusammenhängend mit den Armabschnitten (35L, 35R) in der seitlichen Richtung des Fahrzeugs geformt ist, um die vorderen Enden der Armabschnitte (35L, 35R) miteinander zu verbinden; und
ein Öffnungsabschnitt (44), dessen umgebender Abschnitt endlos zusammenhängend geformt ist und dessen oberes und unteres Ende offen sind, durch den Querabschnitt (38), den Schwenkabschnitt (36) und das Paar aus dem linken und dem rechten Armabschnitt (35L, 35R) geformt ist;
**dadurch gekennzeichnet, dass**
ein Paar aus einem linken und einem rechten zurückspringenden Abschnitt (42), jeweils zur Seite einer Nabenabstützung (39) eingerückt, auf einer inneren Oberfläche einer Wand geformt ist, auf der die Nabenabstützungen (39) auf eine überragende Art geformt sind, wobei die erwähnte Wand eine untere Wand (38a) oder eine obere Wand (38b) des Querabschnitts (38) ist;
und ein Paar aus einer linken und einer rechten Stützrippe (43), jeweils seitlich außerhalb der zurückspringenden Abschnitte (42) positioniert, integral auf der inneren Oberfläche der Wand geformt ist, auf der die Nabenabstützungen (39) geformt sind, um zur Innenseite des Querabschnitts (38) zu ragen.

2. Die Fahrzeugschwinge nach Abschnitt 1, wobei eine Stützbohrung (40) in der Nabenabstützung (39) hinter einem Mittenabschnitt der Nabenabstützung (39) in der Längsrichtung der Nabenabstützung (39) geformt ist, und die Stützrippen (43) geformt sind, um von einer Rückwand (38c) des Querabschnitts (38) nach vorne zu ragen, und vordere Enden der Stützrippen (43) vor hinteren Enden der zurückspringenden Abschnitte (42) positioniert sind.

3. Die Fahrzeugschwinge nach Abschnitt 1 oder 2, wobei die Armabschnitte (35L, 35R) in eine eckige zylindrische Form geformt werden, welche einen rechteckigen querlaufenden Querschnitt hat.

4. Die Fahrzeugschwinge nach Abschnitt 3, wobei der erwähnte Stoßdämpfer (27) angeordnet werden kann, um sich vertikal auszudehnen und durch den Öffnungsabschnitt (44) zu verlaufen, wenn der Stoßdämpfer (27) durch die Nabenabstützungen (39) unterstützt wird, welche von der unteren Wand (38a) des Querabschnitts (38) nach außen ragen, und Entkernbohrungen (45), durch die ein Gusskern entfernt werden kann, auf inneren Wänden der beiden Armabschnitte (35L, 35R) geformt sind, an Abschnitten, wo die Entkernbohrungen (45) dem Öffnungsabschnitt (44) gegenüberstehen.

5. Die Fahrzeugschwinge nach Abschnitt 3 oder 4, wobei Verbindungsbohrungen (51), welche die Verbindung der Innenseite der Armabschnitte (35L, 35R) mit der Innenseite des Schwenkabschnitts (36) erlauben, respektive in verbindenden Abschnitten zwischen den Armabschnitten (35L, 35R) und dem Schwenkabschnitt (36) geformt werden.

6. Die Fahrzeugschwinge nach Abschnitt 5, wobei ein Paar aus einem linken und einem rechten Lager (55) zwischen dem Querabschnitt (36) und einem Stützschaft (23) angeordnet ist, der in einem Zustand, in dem das linke und das rechte Lager (55) außerhalb des Paares von Verbindungsbohrungen (51) angeordnet sind, durch den Schwenkabschnitt (36) geführt wird, und ein Paar aus einem linken und einem rechten ersten Dichtelement (56), das zwischen den Lagern (55) und den Verbindungsbohrungen (51) angeordnet ist, und ein Paar aus einem linken und einem rechten zweiten Dichtelement (57), das zwischen den Lagern (55) und der Außenseite angeordnet ist, zwischen dem Schwenkabschnitt (36) und dem Stützschaft (23) angeordnet sind.

## Revendications

1. Bras oscillant pour un véhicule dans lequel un couple de parties de bras gauche et droite (35L, 35R) qui s'étendent dans la direction longitudinale, une partie pivot (36) qui est formée sur des extrémités avant des parties de bras (35L, 35R), une partie de support d'axe (37) qui est formée sur des extrémités arrière des parties de bras (35L, 35R) afin de supporter de manière pivotante un axe (22) d'une roue arrière (WR), et une partie transversale (38) qui est agencée entre les parties de bras (35L, 35R) et relie les parties de bras (35L, 35R) derrière la partie pivot (36), sont formées d'un seul tenant les unes avec les autres par moulage, au moins la partie transversale (38) est formée en une forme creuse, et un couple de protubérances de support gauche et droite (39) pour supporter un amortisseur (27) est formé d'un seul tenant sur une paroi inférieure (38a) ou une paroi supérieure (38b) de la partie transversale (38) d'une façon en saillie vers l'extérieur,
dans lequel la partie pivot (36) est formée de façon contiguë aux parties de bras (35L, 35R) dans la direction latérale du véhicule de façon à relier les extrémités avant des parties de bras (35L, 35R) l'une à l'autre ; et
une partie d'ouverture (44) dont la partie périphérique est formée sans fin de manière contiguë et dont les extrémités supérieure et inférieure sont ouvertes est formée par la partie transversale (38), la partie pivot (36) et le couple de parties de bras gauche et droite (35L, 35R) ;
**caractérisé en ce que**
un couple de parties en retrait gauche et droite (42), dont chacune est dentelée vers un côté protubérance de support (39), est formé sur une surface intérieure d'une paroi sur laquelle les protubérances de support (39) sont formées d'une façon en saillie, ladite paroi étant une paroi inférieure (38a) ou une paroi supérieure (38b) de la partie transversale (38) ;
et un couple de nervures de renfort gauche et droite (43), dont chacune est positionnée latéralement à l'extérieur des parties en retrait (42), est formé d'un seul tenant sur la surface intérieure de la paroi sur laquelle les protubérances de support (39) sont formées afin de dépasser vers l'intérieur de la partie transversale (38).

2. Bras oscillant pour un véhicule selon la revendication 1, dans lequel un trou de support (40) est formé dans la protubérance de support (39) derrière une partie centrale de la protubérance de support (39) dans la direction longitudinale de la protubérance de support (39), et les nervures de renfort (43) sont formées de façon à dépasser vers l'avant à partir d'une paroi arrière (38c) de la partie transversale (38), et les extrémités avant des nervures de renfort (43) sont positionnées devant les extrémités arrière des parties en retrait (42).

3. Bras oscillant pour un véhicule selon la revendication 1 ou 2, dans lequel les parties de bras (35L, 35R) sont formées en une forme cylindrique angulaire ayant une section en coupe transversale rectangulaire.

4. Bras oscillant pour un véhicule selon la revendication 3, dans lequel ledit amortisseur (27) peut être agencé pour s'étendre verticalement et passer à travers la partie d'ouverture (44) dans un état où l'amortisseur (27) est supporté par les protubérances de support (39) qui dépassent vers l'extérieur à partir de la paroi inférieure (38a) de la partie transversale (38), et des trous d'enlèvement de noyau (45) par lesquels un noyau de coulée peut être enlevé sont formés sur les parois intérieures des deux parties de bras (35L, 35R), au niveau de parties où les trous d'enlèvement de noyau (45) font face à la partie d'ouverture (44).

5. Bras oscillant pour un véhicule selon la revendication 3 ou 4, dans lequel des trous de communication (51) qui permettent à l'intérieur des parties de bras (35L, 35R) de communiquer avec l'intérieur de la partie pivot (36) sont respectivement formés dans des parties de connexion entre les parties de bras (35L, 35R) et la partie pivot (36).

6. Bras oscillant pour un véhicule selon la revendication 5, dans lequel un couple de paliers gauche et droit (55) sont interposés entre la partie pivot (36) et un arbre de support (23) qui est fait pour passer à travers la partie pivot (36) dans un état où les paliers gauche et droit (55) sont agencés à l'extérieur du couple de trous de communication (51), et un couple de premiers éléments de joint gauche et droit (56) qui est agencé entre les paliers (55) et les trous de communication (51) et un couple de seconds éléments de joint gauche et droit (57) qui est agencé entre les paliers (55) et l'extérieur sont interposés entre la partie pivot (36) et l'arbre de support (23).
